Europäisches Patentamt

European Patent Office

Office européen des brevets

(19)

(11) Publication number: **0 152 153**
A2

(12)

# EUROPEAN PATENT APPLICATION

(21) Application number: 85200172.6

(51) Int. Cl.⁴: **F 02 B 27/04**

(22) Date of filing: 12.02.85

(30) Priority: 15.02.84 IT 1962384

(43) Date of publication of application:
21.08.85 Bulletin 85/34

(84) Designated Contracting States:
DE FR GB

(71) Applicant: ALFA ROMEO AUTO S.P.A.
Via Medina 40
I-80133 Napoli(IT)

(72) Inventor: d'Angelo, Domenico
Via Respighi 8
I-20052 Monza Milan(IT)

(74) Representative: Henke, Erwin et al,
Ing.Barzanò & Zanardo Milano S.p.A. Via Borgonuovo,
10
I-20121 Milano(IT)

(54) Resonance device for the exhaust system of an internal combustion engine.

(57) The device comprises one or more resonators each formed from a suitably dimensioned chamber and a suitably dimensioned duct, the duct and chamber branching from a tube of the exhaust system of an internal combustion engine.

Fig.1

This invention relates to a resonance device disposed in the exhaust system of an internal combustion engine, for improving the engine filling.

Current automobiles use internal combustion engines which can be utilised within a very wide range of rotational speeds. For example in the case of controlled-ignition engines, the ratio of maximum to minimum utilisable rotational speed lies between 5 and 6.

Under these conditions, the pressure pulsations created in the exhaust system, due to propagation of the pressure waves which occur on opening the exhaust valves, influence the engine filling differently according to the rotational speed.

In this respect, under certain engine operating conditions, either an overpressure or a vacuum can arise at the exhaust valve of any cylinder which is completing its discharge stage. Consequently, different extents of cylinder filling occur because of the simultaneous opening of the intake valve (valve cross-over).

Leaving the effects of the intake system out of consideration, this pressure variation at the exhaust valves means that the torque delivered by the engine follows a rather irregular pattern within the range of utilisable rotational speeds, especially in the case of single-cylinder engines.

In the case of multi-cylinder engines, in which exhaust systems of a suitable form can be used, this drawback is reduced but is not completely nullified.

The object of the present invention is a resonance device able to modify the oscillatory phenomena which arise in the exhaust system of an internal combustion engine, in such a manner as to prevent the creation of rotational speed zones in which filling is particularly low, so as to attain at least acceptable filling over the entire range of engine utilisation.

The device according to the invention is characterised by comprising at least one resonator formed from a chamber and duct, the duct and chamber branching from a tube of the engine exhaust system.

According to a preferred embodiment, the device comprises a plurality of resonators, each formed from a respective chamber and respective duct, each duct and its respective chamber branching from the individual exhaust tube of a cylinder.

According to a further preferred embodiment, the device comprises several resonators, each formed from a respective chamber and respective duct, each duct and its respective chamber branching from a common exhaust tube into which the individual exhaust tubes of at least two cylinders converge.

The resonator or resonators are dimensioned in such a manner as to lower the intrinsic oscillation frequency of the exhaust gas present in the engine exhaust system, so that at the exhaust valve, during cross-over, there arises a pulsation of negative pressure which is able to facilitate filling of the relative cylinder.

For this purpose, it is advisable for a resonator chamber to have a volume of between 0.2 and 2 times, and preferably between 0.2 and 1 times, the piston displacement of the cylinder or cylinders which discharge their exhaust gas into the tube from which said resonator branches; and it is also advisable for the ratio of the cross-section to the length of a resonator duct to be between 0.1 and 4 mm, and preferably between 1 and 2 mm.

Characteristics and advantages of the invention are described hereinafter with reference to the accompanying drawings, which show preferred embodiments of the invention by way of non-limiting example.

Figure 1 is a diagrammatic illustration of a first embodiment of the invention; and

Figure 2 is a diagrammatic illustration of a further embodiment.

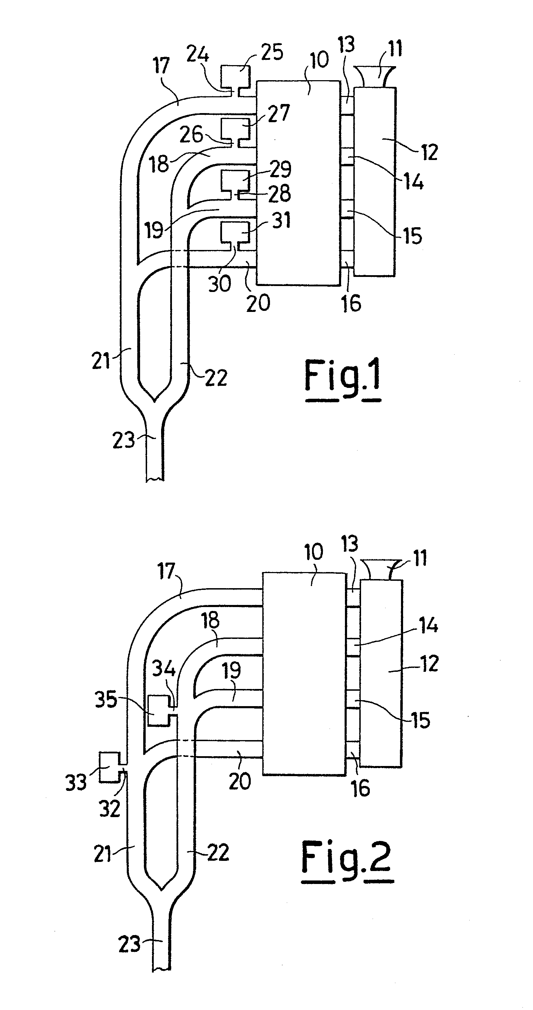

Figure 1 shows an internal combustion engine, represented diagrammatically by the block 10. Its intake system comprises an air inlet 11, a filter 12, and individual intake ducts 13, 14, 15, 16, which feed the engine cylinders, namely four in-line in this case.

The reference numerals 17, 18, 19, 20 indicate the individual tubes into which the exhaust gas is discharged from the respective cylinders. The individual tubes 17 and 20 converge into a common tube indicated by 21, and the individual tubes 18 and 19 converge into the common tube 22. The tubes 21 and 22 converge into a single pipe 23, shown partly, which discharges the gas to atmosphere after it has passed through the usual silencers and possible post-combustion muffler (not shown).

According to the invention, each individual exhaust tube is provided with a resonator. From the tube 17 there branches a duct 24 connected to a chamber 25, from the tube 18 there branches a duct 26 connected to a chamber 27, from the tube 19 there branches a duct 28 connected to a chamber 29, and from the tube 20 there branches a duct 30 connected to a chamber 31.

In order to tune the resonators in such a manner that negative pressure pulsations arise at the exhaust valves, not shown, of the individual

0152153

-4 -

engine cylinders during cross-over, the volume V of the chambers 25, 27, 29, 31 is chosen such that each is equal to between 0.2 and 2 times, and preferably between 0.2 and 1 times, the piston displacement of the relative cylinder, and the ducts 24, 26, 28, 30 are each formed with a ratio of cross-section S to length L of between 0.1 and 4 mm, and preferably of between 1 and 2 mm.

The device thus enables the cylinder filling to be improved over most of the range of utilisation of the engine.

In the embodiment of the device shown in Figure 2, common elements are indicated by the same reference numerals as used in Figure 1. In this case, the resonators are connected into the common exhaust tubes 21 and 22. From the tube 21 there branches a duct 32 connected to a chamber 33, and from the tube 22 there branches a duct 34 connected to a chamber 35.

The volume V of each of the chambers 33 and 35 is chosen at between 0.2 and 2 times, and preferably between 0.2 and 1 times, the piston displacement of the pair of cylinders which discharge their exhaust gas into the pairs of tubes 17, 20 and 18, 19 respectively. The ducts 32 and 34 are dimensioned in accordance with the same criteria as indicated for the embodiment of Figure 1.

CLAIMS:

1.     A resonance device for an internal combustion engine exhaust system, formed from individual exhaust tubes of a number equal to the number of cylinders of said engine, and from common exhaust tubes into which at least two individual exhaust tubes converge, characterised by comprising at least one resonator formed from a chamber and duct, the duct and chamber branching from a tube of said exhaust system.

2.     A resonance device as claimed in claim 1, characterised by comprising a plurality of resonators, each formed from a respective chamber and respective duct, each duct and its respective chamber branching from the individual exhaust tube of a cylinder.

3.     A resonance device as claimed in claim 1, characterised by comprising several resonators, each formed from a respective chamber and respective duct, each duct and its respective chamber branching from a common exhaust tube into which the individual exhaust tubes of at least two cylinders converge.

4.     A resonance device as claimed in claim 1, characterised in that said chamber has a volume of between 0.2 and 2 times, and preferably between 0.2 and 1 times, the piston displacement of the cylinder which discharges its exhaust gas into the tube from which said chamber branches.

5.     A resonance device as claimed in claim 1, characterised in that said chamber has a volume of between 0.2 and 2 times, and preferably between 0.2 and 1 times, the piston displacement of the cylinders which discharge their exhaust gas into the tube from which said chamber branches.

6.      A resonance device as claimed in claim 1, characterised in that said duct is formed in such a manner that the ratio of its cross-section to its length is between 0.1 and 4 mm, and preferably between 1 and 2 mm.

0152153

Fig.1

Fig.2